# EUROPÄISCHE PATENTSCHRIFT

(11) **EP 0 863 330 B1**
(45) Veröffentlichungstag und Bekanntmachung des Hinweises auf die Patenterteilung: **03.12.2003**
(21) Anmeldenummer: 98102073.8
(22) Anmeldetag: 06.02.1998
(51) Int. Cl.: F16F 15/139

(54) **Mechanischer Torsionsschwingungsdämpfer**
Mechanical torsional vibration damper
Amortisseur mécanique de vibrations de torsion

(30) Priorität: 03.03.1997 DE 19708328
(43) Veröffentlichungstag der Anmeldung: 09.09.1998
(60) Teilanmeldung: 03021384.7
(73) Patentinhaber: Rohs - Voigt Patentverwertungsgesellschaft mbH, 52351 Düren (DE)
(72) Erfinder: Rohs, Ulrich, Dr.-Ing., 52351 Düren (DE); Rohs, Hans, cand.-Ing., 52351 Düren (DE); Heidingsfeld, Dietmar, Dipl.-Ing., 52078 Aachen (DE)
(74) Vertreter: Castell, Klaus, Dr.

(56) Entgegenhaltungen:
- DE-A- 3 429 705
- DE-A- 4 341 547
- FR-A- 2 687 749
- FR-A- 2 690 959
- GB-A- 2 093 565
- GB-A- 2 269 883
- GB-A- 2 273 335
- US-A- 5 496 216

## Beschreibung

Die Erfindung betrifft einen mechanischen Torsionsschwingungsdämpfer.

Im Fahrzeugmotorenbau tritt das Problem auf, daß die vom Motor durch die Zündfolge hervorgerufenen Drehschwingungen in den Abtriebsstrang übertragen werden, insbesondere dann, wenn die Frequenzen den Eigenfrequenzen des Systems nahekommen. Dies ist insbesondere im Leerlauf, aber auch bei Lastwechselsituationen unangenehm.

Um dies zu vermeiden, sind verschiedene Konstruktionen sogenannter mechanischer Torsionsschwingungsdämpfer bekannt, bei denen zwischen einem mit der Kurbelwelle des Motors verbundenen Primärteil und einem mit der Schaltkupplung verbundenen Sekundärteil elastische Dämpfungsmittel in Form von Federn oder hydraulischen Bauteilen angeordnet sind.

Bekannte Systeme haben jedoch den Nachteil, daß sie nur einen Teil des Arbeitsspektrums des Antriebs umfassen, aber im übrigen Lastbereich wirkungslos sind. Das Problem besteht darin, daß für den Lastbereich eine dem übertragenen Drehmoment und der Drehzahl entsprechend hohe Federkraft und Dämpfung erforderlich sind, während im Leerlauf nur geringe Federkräfte und so gut wie keine Dämpfung vorliegen dürfen, um eine Leerlaufentkopplung zu erreichen. Im kritischen Drehzahlbereich, d. h. bei Drehzahlen im Bereich der Eigenfrequenz, ist aber eine sehr hohe Dämpfung erforderlich, da andernfalls deutliche Überhöhungen der Drehbeschleunigungen gegenüber der Primärseite auftreten. Dieser Drehzahlbereich wird vor allem beim Anlassen des Motors, aber auch bei Lastwechselsituationen durchlaufen. Im Resonanzfall können dynamische Momente auftreten, die das Vielfache des Nennmoments betragen.

Zum nicht vorveröffentlichten Stand der Technik zählt die DE 195 44 832 (der EP 0 777 059 A entsprechend, welche zum Stand der Technik gemäß Art. 54 Abs. 3 EPÜ gehört), aus der ein mechanischer Torsionsschwingungsdämpfer mit einem Primär- und einem Sekundärteil bekannt ist, die über ein formkraftschlüssiges Federungs- und Dämpfungssystem aus an Berührungsflächen am Primär- und Sekundärteil angreifenden tangentialen Druckfedern und Schubkolben verbunden sind. Diese Kupplung besteht aus einer umlaufenden Antriebsscheibe und einer hierzu koaxialen, gleichsinnig umlaufenden Abtriebsscheibe mit Mitteln zur elastischen Kraftübertragung, wobei die Antriebsscheibe die Abtriebsscheibe teilweise übergreift und an der Innenseite des übergreifenden Teiles über den Umfang verteilte, radiale Taschen aufweist, deren Mantelfläche zu ihren Umfangsenden hin leicht keilförmig auf die Antriebsscheibe zuläuft; die Mantelfläche der Abtriebsscheibe im Querschnitt polygonal ist; in den Taschen Paare keilförmiger Schubkolben angeordnet sind, die gegeneinander durch mindestens eine Druckfeder auseinandergehalten sind; die Schubkolben an ihren der Mantelfläche der Abtriebsscheibe zugewandten Seiten eben oder leicht gewölbt ausgebildet sind und in der Antriebsscheibe oder an den Schubkolben Druckfedern angeordnet sind, die auf die Abtriebsscheibe einwirken und bei Leerlauf lediglich ein Rückstellmoment von der Antriebs- auf die Abtriebsscheibe, aber so gut wie keine Reibungskraft ausüben.

Um ein Aufeinandertreffen der sich gegenüberliegenden Schubkolben bei hoher Umfangskraft zu vermeiden, und eine geeignete Anpassung der Dämpfung an die Umfangskraft zwischen Primär- und Sekundärteil zu erzielen, liegt der vorliegenden Erfindung die Aufgabe zugrunde, einen mechanischen Torsionsschwingungsdämpfer zu entwickeln, der über den gesamten Lastbereich eine geeignete Dämpfung bewirkt.

Diese Aufgabe wird erfindungsgemäß nach Anspruch 1 durch einen mechanischen Torsionsschwingungsdämpfer gelöst, der ein Primär- und ein Sekundärteil, die über ein Federungs- und Dämpfungssystem aus an Berührungsflächen am Primärund Sekundärteil angreifenden tangentialen Druckfedern und Schubkolben verbunden sind, und eine zwischen dem Primärteil und dem Sekundärteil vorgesehene zusätzliche Dämpfungseinrichtung aufweist.

In üblichen Lastzuständen wirkt lediglich das zwischen Primär- und Sekundärteil angeordnete Federungs- und Dämpfungssystem aus tangentialen Druckfedern und Schubkolben, das aus der DE 195 44 832 bekannt ist. Treten im System hingegen größere zu kompensierende Drehmomente und damit größere Drehwinkel zwischen Primär- und Sekundärteil auf, wird also ein vorbestimmter relativer Drehwinkel (freies Spiel) zwischen dem Primär- und dem Sekundärteil überschritten, wird die eingebrachte Energie durch die dann zu wirken beginnende zusätzliche Dämpfungseinrichtung durch Reibung in Wärme umgesetzt und so dem System entzogen, so daß es nicht zu einer Überhöhung gegenüber der Primärseite kommt.

Vorteilhafte Ausgestaltungen der Erfindung sind Gegenstand der Unteransprüche.

Besonders bevorzugt ist es, wenn das Dämpfungsmittel einen, in eine Nut des Primär- oder des Sekundärteils, vorzugsweise spielfrei eingesetzten Schleppring aufweist, der an seiner der Nut gegenüberliegenden Seite Mitnehmernocken aufweist, die in an dem Sekundär- oder dem Primärteil angebrachte Vertiefungen mit Freispiel eingreifen.

Die Reibarbeit wird, in radialer Richtung gesehen, an der Außen- und Innenfläche des Schleppreibringes und den daran anliegenden Seiten der Nut verrichtet. Diese Ausführungsform ist besonders kompakt und preiswert und läßt sich leicht in bestehende mechanische Torsionsschwingungsdämpfer integrieren.

Vorteilhaft ist es, wenn der Schleppreibring nach Art eines Wellendichtrings ein offenes Hohlprofil aufweist, in dem eine gewickelte Metallfeder, ein Gummiring oder dergleichen, aufgenommen ist. Als Gummiring wird insbesondere ein O-Ring vorgeschlagen. Die gewickelte Metallfeder, der Gummi-O-Ring oder dergleichen, wirken dabei als Mittel zum Vorspannen des Schleppreibringes in radialer Richtung. Durch diese Ausbildung ist es möglich, die Flächenpressung des Schleppreibringes an den Wandungen der Nut und damit die Dämpfungscharakteristikdes Schleppreibringes durch Variieren der eingebrachten Elemente an den speziellen Anwendungsfall (Art, Leistung und Nennmoment des Motors) anzupassen.

Es ist jedoch auch möglich, mit dem Gummi-O-Ring eine achsiale Kraft auf das Primär- oder das Sekundärteil zu übertragen.

Die bisher beschriebenen Ausführungsformen von Schleppreibringen weisen eine winkelunabhängige Reibung auf. In bestimmten Anwendungsfällen kann es aber sinnvoll sein, wenn der Schleppreibring und die diesen aufnehmende Nut in Umfangsrichtung eine ungleichförmige Breite aufweist.

Eine bevorzugte Ausführungsform sieht vor, daß der Schleppreibring mindestens zwei ineinandergreifende Teile mit dazwischen befindlicher Fettfüllung aufweist. Durch diese Ausbildung wird anstelle von Coulomb'scher Reibung in der enthaltenen Fettfüllung eine für bestimmte Anwendungen sinnvolle geschwindigkeitsproportionale Scherreibung erzeugt.

Ein vorteilhafter Aufbau ist dadurch zu erzielen, daß die Dämpfungseinrichtung einen in Umfangsrichtung unterbrochenen Spannring aufweist.

Um einen beim Verdrehen des Primärteils zum Schleppring definierten vorbestimmten Reibungsanstieg zu erzielen, wird vorgeschlagen, die Mitnehmernocken des Schleppreibrings und die Vertiefungen des Primärteils und/oder die Berührungsflächen des Schleppreibringes und des Sekundärteils mit Auflaufflächen, Rampen- oder Kurvenflächen auszubilden. Dadurch kann eine genau definierte von der Umfangskraft abhängige Reibung erzeugt werden, da die beiden zusammenwirkenden Flächenpaare bei zunehmendem relativem Drehwinkel in achsialer Richtung aufeinander gepreßt werden und so eine winkelabhängige Reibung erzeugen.

Vorteilhaft ist es weiterhin, wenn die den Schleppreibring aufnehmende Nut in achsialer Richtung konisch ausgebildet ist. Insbesondere eine derartige konische Ausbildung in Verbindung mit den angesprochenen Rampen hat in der Praxis zu besonders guten Dämpfungsergebnissen geführt.

Im Hinblick auf die Anforderungen an den Schleppring hat sich Kunststoff als bevorzugtes Material herausgestellt.

Mehrere Ausführungsbeispiele sind in den Zeichnungen dargestellt und werden im folgendem näher beschrieben. Es zeigt,
- Figur 1: eine axiale Teilschnittansicht einer ersten Ausführungsform eines erfindungsgemäßen Schleppreibringes mit gewickelter Metallfeder,
- Figur 2: einen Querschnitt durch die in Figur 1 gezeigte erfindungsgemäße Kupplung,
- Figur 3: eine Abwicklung des Schleppreibringes und des Primärteils aus Figur 1,
- Figur 4: eine Abwicklung eines alternativen Schleppreibrings und des Primärteils,
- Figur 5: eine axiale Teilschnittansicht einer zweiten Ausführungsform eines erfindungsgemäßen Schleppreibrings mit Gummi-O-Ring,
- Figur 6: eine axiale Teilschnittansicht einer dritten Ausführungsform eines erfindungsgemäßen Schleppreibrings mit Fettfüllung,
- Figur 7: eine Unteransicht einer vierten Ausführungsform eines erfindungsgemäßen Schleppreibrings mit winkelabhängiger Reibungserhöhung in radialer Richtung wirkend,
- Figur 8: eine Abwicklung des Schleppreibrings, eines Primärteils- und eines Sekundärteils mit winkelabhängiger Reibungserhöhung in axialer Richtung wirkend,
- Figur 9: einen Schleppreibring als in Umfangsrichtung unterbrochener Spannring und
- Figur 10: die Wirkungsweise des erfindungsgemäßen Torsionsschwingungsdämpfers mit Schleppreibring in schematischer, grafischer Darstellung als Kennlinienüberlagerung.

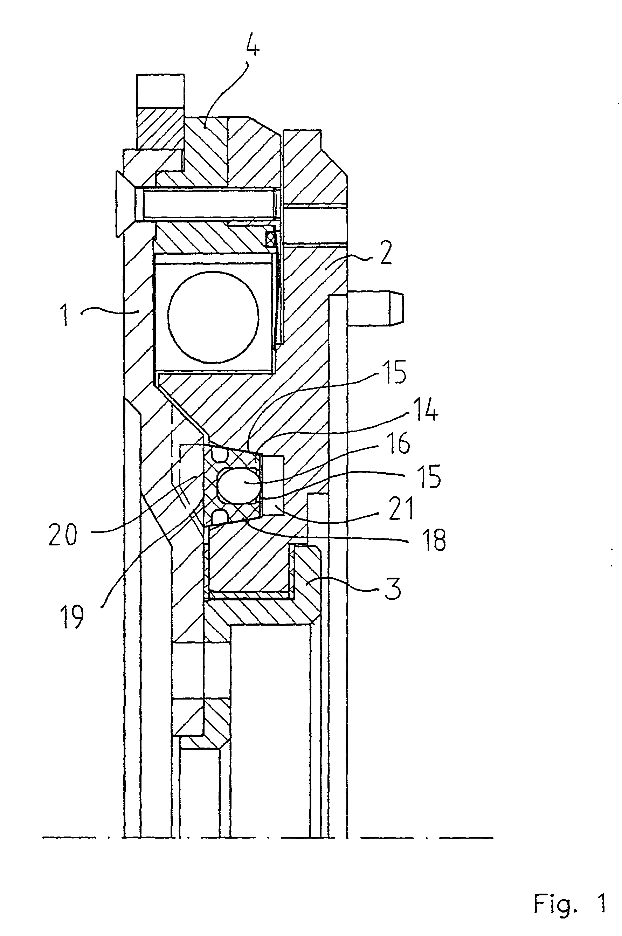

In der Figur 1 ist mit der Bezugsziffer 1 das Primärteil bezeichnet, das hier als Antriebsscheibe ausgebildet ist. Hierzu koaxial ist die Abtriebsscheibe oder das Sekundärteil 2 angeordnet. An der Rückseite der Abtriebsscheibe 2 greift ein nicht dargestellter Antriebsstrang mit weiteren Kupplungselementen einer Schaltkupplung oder dergleichen an.

Die Abtriebsscheibe 2 sitzt auf einer Zentriernabe 3, die ein axiales Z-förmiges Profil hat und mit der Antriebsscheibe 1 verbunden ist.

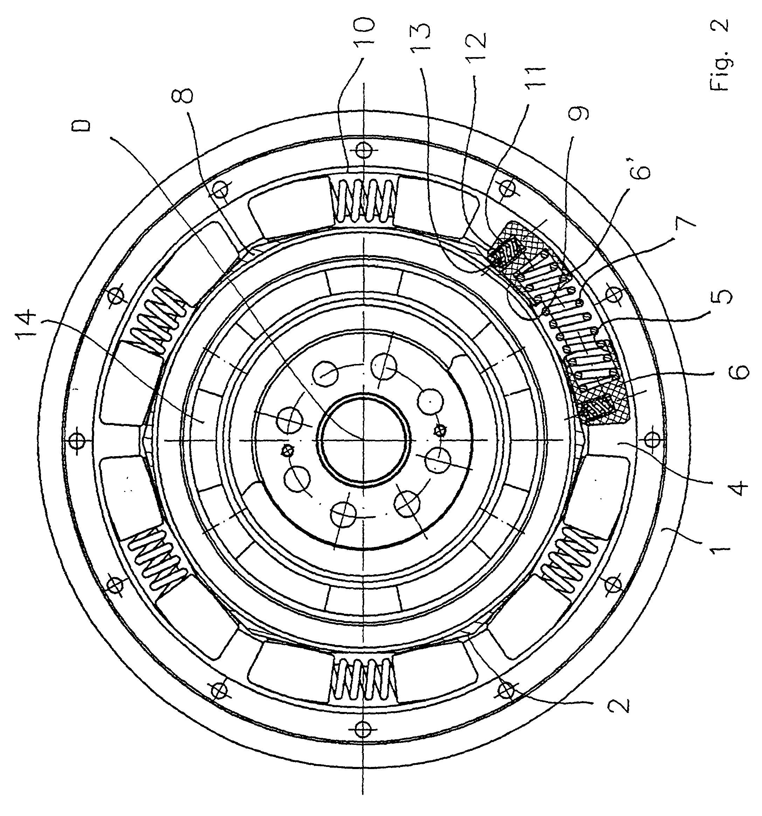

Wie Figur 2 zeigt, weist die Antriebsscheibe 1 einen ringförmigen Teil 4 auf, der einen vorderen Teil der Abtriebsscheibe 2 übergreift und an seiner Innenseite über den Umfang verteilte, radiale Taschen 5 aufweist, die zu beiden Enden hin, keilförmig verjüngt sind.

In jeder Tasche 5 ist ein Paar Schubkolben 6 angeordnet, die durch mindestens eine Druckfeder 7 auseinandergedrückt werden. Im Leerlauf liegen die Schubkolben 6 gegen die Enden der Tasche 5 an.

Die Mantelfläche 8 der Abtriebsscheibe 2 ist im Querschnitt polygonal ausgebildet. Dementsprechend ist die der Abtriebsscheibe 2 zugewandte Seite 9 der Schubkolben 6 eben oder leicht gewölbt ausgebildet.

Die Mantelfläche 10 jeder Tasche 5 bildet einen Teilzylinder, dessen Krümmungsachse annähernd mit der Drehachse der Kupplung übereinstimmt oder auf der radialen Mittelebene durch die Tasche 5 zwischen dieser und der Drehachse der Kupplung liegt. Die radiale Mittelebene enthält die Drehachse D und einen darauf senkrecht stehenden die Tasche schneidenden radialen Strahl.

In den Schubkolben 6 sind radiale Bohrungen 11 vorgesehen, in denen kleine Druckfedern 12 angeordnet sind, die mittels Übertragungskugeln 13, auf die Mantelfläche 8 der Abtriebsscheibe 2 drücken. Damit wird während des Leerlaufs ein Rückstellmoment von der Antriebs- auf die Abtriebsscheibe, aber so gut wie keine Reibungskraft ausgeübt.

Wenn die Antriebsscheibe 1 gedreht wird und ein Drehmoment auf den Abtriebsstrang überträgt, bewegt sie sich relativ zur Abtriebsscheibe 2 und bewegt dann jeweils einen der beiden in einer Tasche 5 befindlichen Schubkolben 6 gegen den anderen Schubkolben 6' und dabei wird auf die Antriebsscheibe 1 eine Reibungskraft ausgeübt, die zu einer Dämpfung der Drehschwingungen führt.

Wenn jedoch das zwischen Antriebsscheibe 1 und Abtriebsscheibe 2 entstehende Drehmoment zu groß wird, wie es zum Beispiel bei Durchlaufen der kritischen Drehzahl im Moment des Anlassens möglich ist, würde dieses Dämpfungssystem alleine nicht ausreichen und die Schubkolben 6 kämen nahe aneinander oder würden sogar aufeinanderschlagen. Dies hätte zum einen unangenehme Geräusche und zum andern auf Dauer eine Zerstörung der Schubkolben 6 zur Folge.

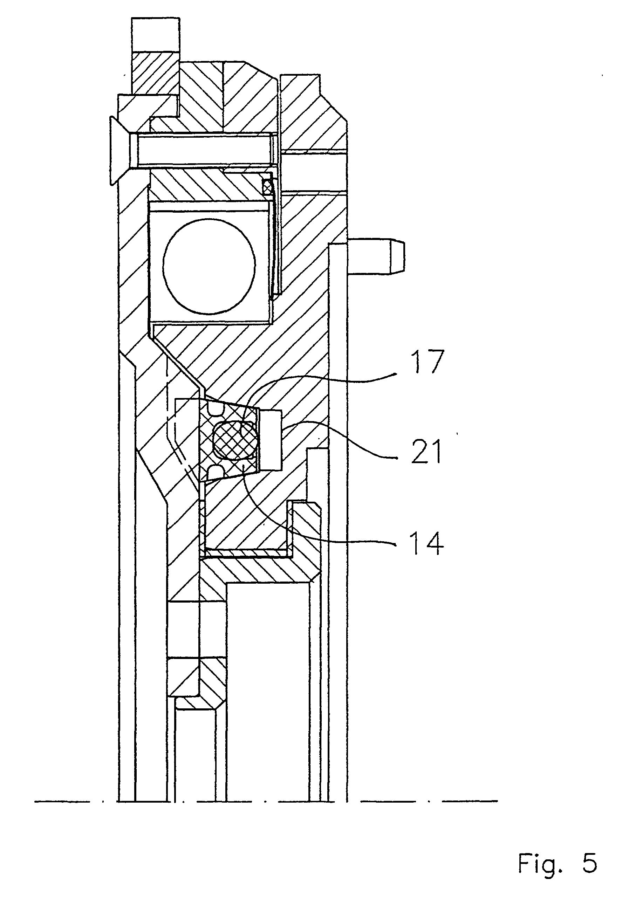

Für diesen Fall ist daher der nachstehend beschriebene, erfindungsgemäße Schleppreibring 14 vorgesehen. Der Schleppreibring 14 ist als ringförmiges Teil aus Kunststoff ausgebildet und weist ein offenes Hohlprofil auf, das in Figur 1 als U-Profil oder umlaufende Nut 15 dargestellt ist. In dieser Nut 15 befindet sich im Ausführungsbeispiel nach Figur 1 eine gewickelte Metallfeder 16 und im Ausführungsbeispiel nach Figur 5, ein Gummi-O-Ring 17. Dieses federnde Element 16 oder 17 dient dazu, auf die Flanken 18 des Schleppreibringes 14 eine definierte Spreizkraft auszuüben.

An der der offenen Seite der umlaufenden Nut 15 gegenüberliegenden Seite 19 weist der Schleppreibring 14 am Umfang verteilte Mitnehmernocken 20 auf. Der Schleppreibring 14 wird mit der offenen Seite der umlaufenden Nut 15 in eine ringförmige, in axialer Richtung im wesentlichen konisch ausgebildete Nut 21, spielfrei eingesetzt. Diese konische Nut 21 ist in der Abtriebsscheibe 2 ausgebildet und verjüngt sich in Richtung zur Öffnung der im Schleppreibring 14 ausgebildeten umlaufenden Nut 15.

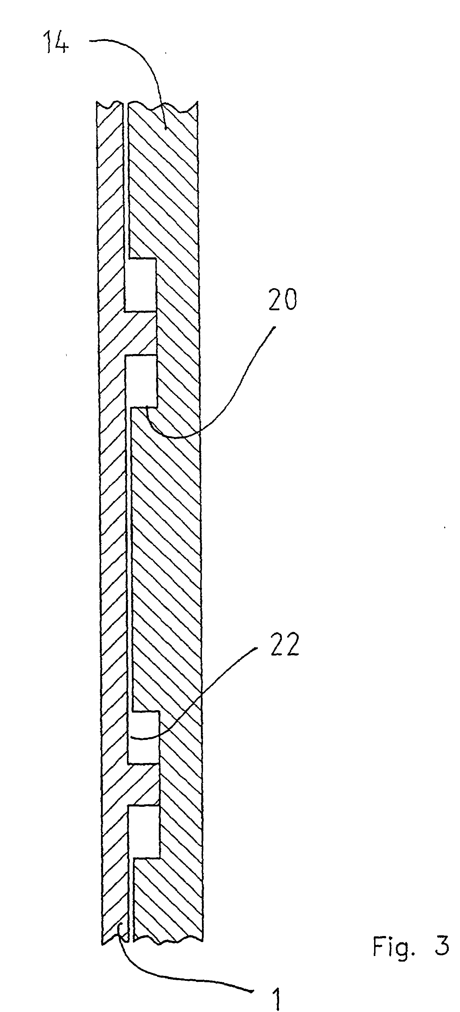

Wie in der Abwicklung in Figur 3 dargestellt, greifen die Mitnehmernocken 20 des Schleppreibrings 14 mit Umfangsspiel in Vertiefungen 22 der Antriebsscheibe 1 ein. Dieses Spiel ermöglicht es, daß das oben beschriebene Federungs- und Dämpfungssystem aus tangentialen Druckfedern 7 und Schubkolben 6 bei geringen Amplituden frei arbeiten kann. Es verbleibt nur ein geringes Restreibmoment, das durch die Kontaktkraft zwischen Primärteil 1 und Schleppreibring 13 verursacht wird.

Erst wenn die Amplituden zu groß werden, schlagen die Mitnehmernocken 20 an der einen oder anderen Seite der Vertiefungen 22 in der Antriebsscheibe 1 an, wodurch der Schleppreibring 14 unter Verrichtung von Reibarbeit in der Nut 21 verdreht wird. An dieser neuen Position kann, wenn weiterhin nur noch geringe Amplituden auftreten, wiederum das oben beschriebene Federungs- und Dämpfungssystem arbeiten.

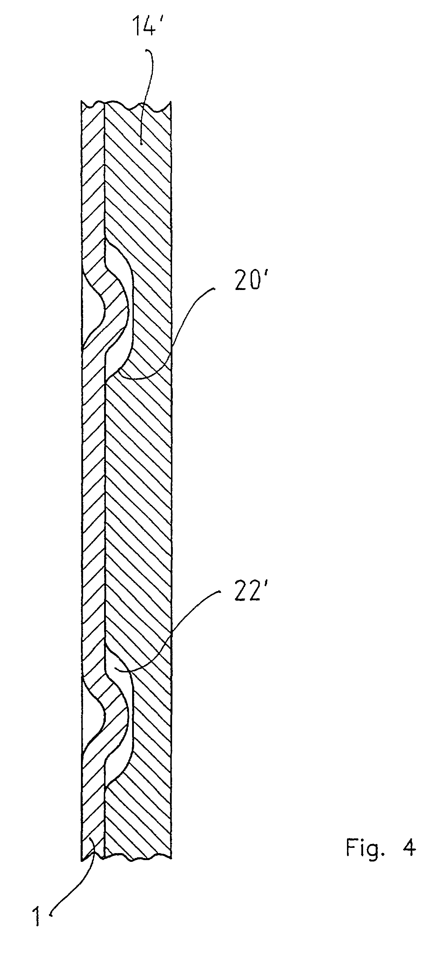

Bei der in Figur 4 gezeigten Alternative einer Abwicklung sind die Mitnehmernocken 20' und die Vertiefungen 22' im Schleppring 14' an ihren Kanten abgerundet. Diese Abrundung, die auch als Rampe oder Kurvenlinie ausgebildet sein kann, dient dazu, im Bereich des Anschlages Primärteil 1 und Schleppreibring 14' axial auseinander zu drücken, um dadurch die entstehende Reibung zu erhöhen.

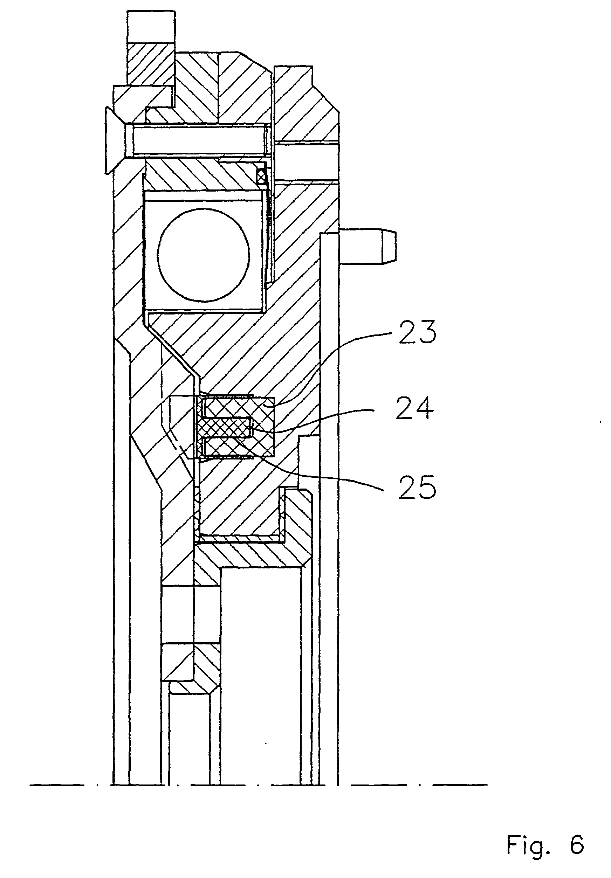

Die Figuren 5 und 6 zeigen weitere Ausführungensmöglichkeiten des Schleppreibringes, wobei in Figur 5 ein Gummi-O-Ring 17 dargestellt ist, um das zum Verdrehen des Schleppringes 14 in der Nut 21 erforderliche Drehmoment einzustellen und in Figur 6 ein zweiteilig ausgebildeter Schleppreibring 23, 24, bei dem zwischen dem ersten Teil 23 und dem zweiten Teil 24 eine Fettfüllung 25 eingebracht ist. Durch Relativbewegungen der Teile 23 und 24 des Schleppreibrings 23, 24 gegeneinander, entsteht keine Coulomb'sche Reibung, sondern eine geschwindigkeitsproportionale Scherreibung in der Fettfüllung 22.

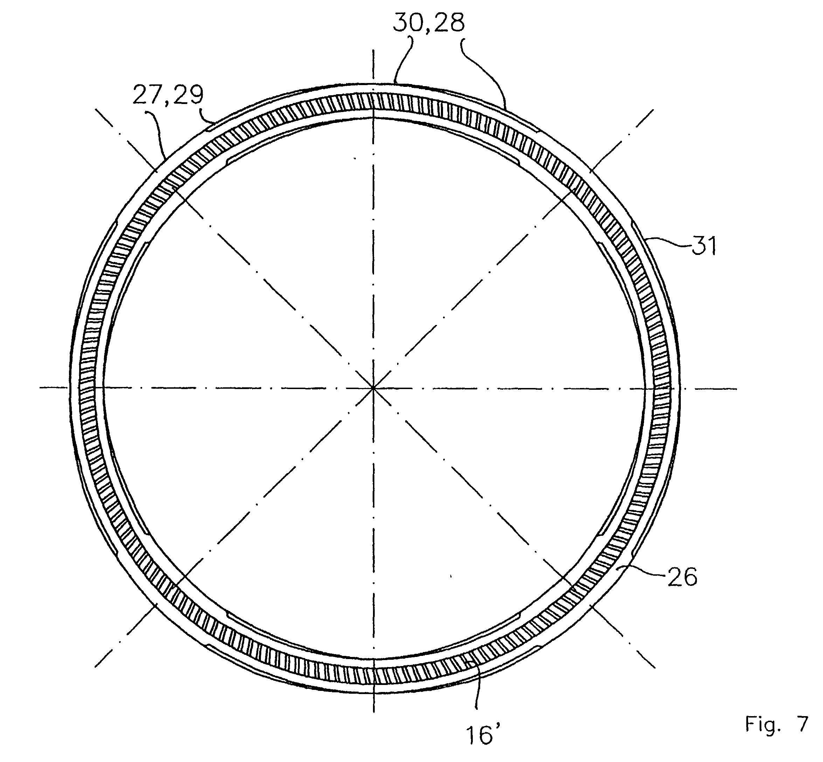

Figur 7 zeigt eine weitere Ausführungsform eines Schleppreibringes 26, hier mit gewickelter Metallfeder 16'. Der Schleppreibring 26 weist keinen umlaufend gleichen Innen- und Außendurchmesser auf, sondern mehrere relativ breite Bereiche 27 und mehrere relativ schmale Bereiche 28. Diese arbeiten mit entsprechend ausgearbeiteten Bereichen 29, 30 in der Nut 31 der Abtriebsscheibe 2 zusammen. Hierdurch wird erzielt, daß das ausgeübte Reibmoment winkelabhängig ist. Bewegt sich nämlich der breite Bereich 27 des Schleppreibringes 26 in den verengten Bereich 30 der Nut 31 hinein, wird das Reibmoment größer. Dies kann für bestimmte Anwendungsfälle von Vorteil sein.

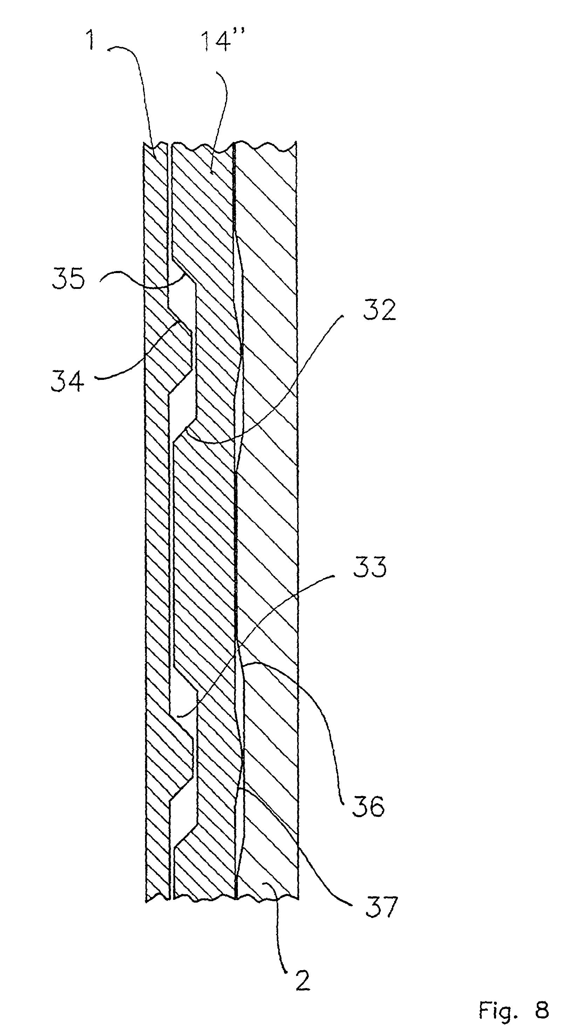

In Figur 8 ist eine Abwicklung eines Schleppreibringes 14" in Zusammenwirkung mit der Antriebsscheibe 1 und der Abtriebsscheibe 2 dargestellt, bei dem die Mitnehmernocken 32 des Schleppreibringes 14" und die Vertiefungen 33 in der Antriebsscheibe 1 in axialer Richtung als Rampen 34, 35 ausgebildet sind. Hierdurch wird bei entsprechend großem Drehmoment und daraus resultierendem Drehwinkel der Schleppreibring 14" in axialer Richtung auf die Antriebsscheibe 2 gepreßt, an deren Berührungsfläche ebenfalls Rampen 36, 37 ausgebildet sind, die eine winkelabhängige Coulomb'sche Reibung erzeugen.

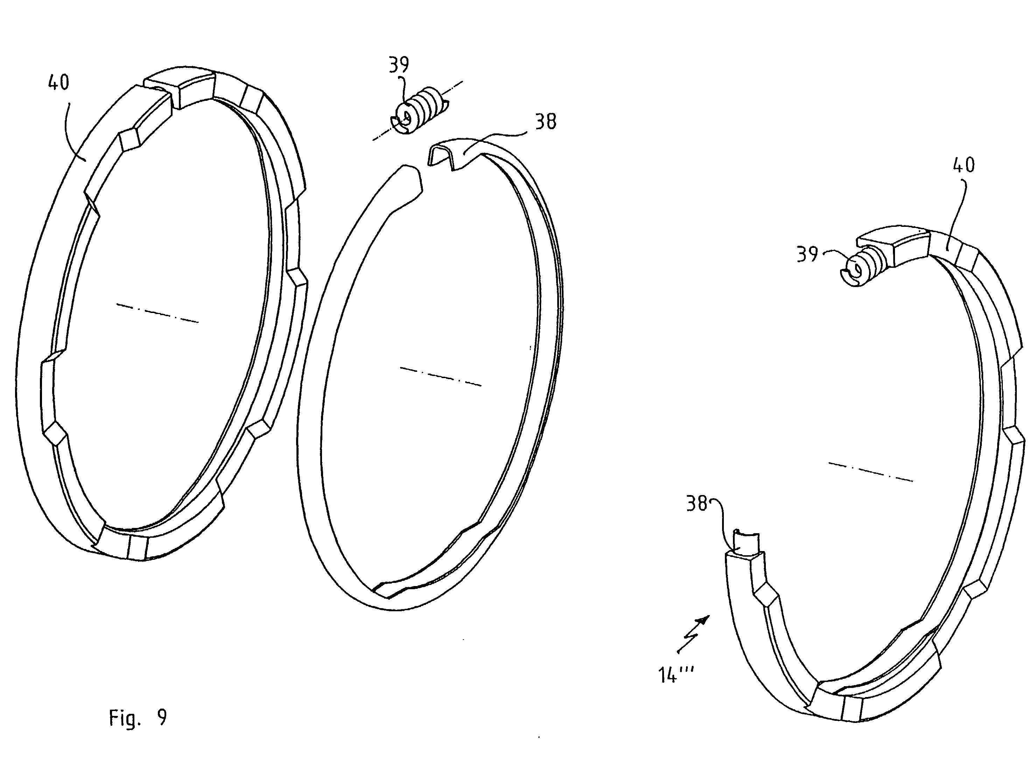

Figur 9 zeigt eine weitere Ausführungsform eines Schleppreibringes 14'''. Das federnde Element wird bei diesem Schleppreibring durch einen Blechring 38 gebildet, der von einer Druckfeder 39 auseinandergespreizt wird. Der Blechring 38 und die Druckfeder 39 liegen in einer Innennut eines Kunststoffrings 40, der als Schleppreibring wirkt.

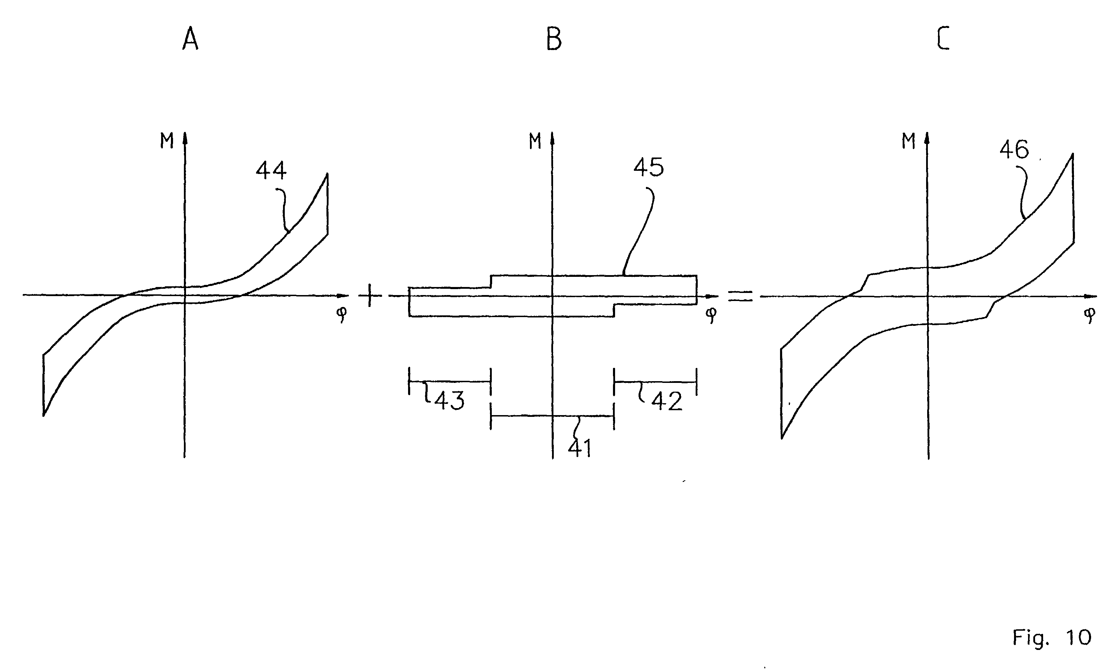

In Figur 10 ist die Wirkungsweise des erfindungsgemäßen Torsionsschwingungsdämpfers mit Schleppreibring anhand einer . Kennlinienüberlagerung erläutert. Das Diagramm A zeigt die natürliche Winkeldrehmomentkennlinie eines herkömmlichen Federungs- und Dämpfungssystems. Diagramm B zeigt eine entsprechende Kennlinie des Schleppreibringes, bei der geringe Reibmomente innerhalb des Freiwinkels 41 und relativ hohe im Bereich der Mitnahme 42, 43 auftreten.

Die von den jeweiligen Schleifen 44, 45, 46 eingeschlossenen Flächen entsprechen den Dämpfungsenergien, die dem System beim Durchlauf großer Winkelamplituden entzogen werden. Diagramm C ist eine Überlagerung der Wirkungen nach Diagramm A und Diagramm B und zeigt den gegenüber dem Diagramm A deutlich erhöhten Dämpfungsanteil.

## Patentansprüche

1. Mechanischer Torsionsschwingungsdämpfer mit einem Primärteil (1) und einem Sekundärteil (2), die über ein Federungs- und Dämpfungssystem aus an Berührungsflächen am Primär- (1) und Sekundärteil (2) angreifenden tangentialen Druckfedern (7) und Schubkolben (6, 6') verbunden sind, wobei das Primärteil (1) einen ringförmigen Teil (4) aufweist, der einen vorderen Teil des Sekundärteils (2) übergreift und an seiner Innenseite über den Umfang verteilte, in Umfangsrichtung verlaufende Taschen (5) aufweist, und wobei in jeder in Umfangsrichtung verlaufenden Tasche (5) ein Paar Schubkolben (6, 6') angeordnet ist, die durch mindestens eine Druckfeder (7) auseinander gedrückt werden, und wobei eine Relativbewegung des Primärteils bezüglich des Sekundärteils (2) eine Bewegung eines der beiden in einer Tasche (5) befindlichen Schubkolbens (6) gegen den anderen Schubkolben (6') bedingt unter Ausübung einer Reibkraft auf das Primärteil (1), was zu einer Dämpfung von Drehschwingungen führt, wobei der Torsionsschwingungsdämpfer eine zwischen dem Primärteil (1) und dem Sekundärteil (2) vorgesehene zusätzliche Dämpfungseinrichtung (14; 14'; 23, 24; 26; 14"; 14''') aufweist.

2. Mechanischer Torsionsschwingungsdämpfer nach Anspruch 1, ***dadurch gekennzeichnet, daß*** die zusätzliche Dämpfungseinrichtung (14; 14'; 23, 24; 26; 14"; 14''') radial wirkt.

3. Mechanischer Torsionsschwingungsdämpfer nach einem der vorhergehenden Ansprüche, ***dadurch gekennzeichnet, daß*** die zusätzliche Dämpfungseinrichtung (14; 14'; 23, 24; 26; 14"; 14''') ringförmig ist.

4. Mechanischer Torsionsschwingungsdämpfer nach einem der vorhergehenden Ansprüche, ***dadurch gekennzeichnet, daß*** die Dämpfungseinrichtung (14; 14'; 23, 24; 26; 14"; 14''') einen in eine Nut (21) des Primärteils (1) oder des Sekundärteils (2) vorzugsweise spielfrei eingesetzten Schleppreibring (14; 14'; 23, 24, 26; 14"; 14''') der an seiner der Nut 21 gegenüberliegenden Seite Mitnehmernocken (20) aufweist, die in an dem Sekundärteil (2) oder dem Primärteil (1) eingebrachte Vertiefungen (22, 22') mit Freispiel eingreifen.

5. Mechanischer Torsionsschwingungsdämpfer nach Anspruch 4 , ***dadurch gekennzeichnet, daß*** der Schleppreibring (14; 14'; 23, 24, 26; 14''; 14''') nach Art eines Wellendichtrings ein offenes Hohlprofil aufweist, in dem eine gewickelte Metallfeder (16), ein Gummi-O-Ring (17) oder dergleichen aufgenommen ist.

6. Mechanischer Torsionsschwingungsdämpfer nach Anspruch 4 oder 5, ***dadurch gekennzeichnet, daß*** der Schleppreibring (26) und die diesen aufnehmende Nut (31) in Umfangsrichtung eine ungleichförmige Breite aufweisen.

7. Mechanischer Torsionsschwingungsdämpfer nach einem der Ansprüche 4 bis 6, ***dadurch gekennzeichnet, daß*** der Schleppreibring (23, 24) mindestens zwei ineinandergreifende Teile (23, 24) mit dazwischen befindlicher Fettfüllung (25) aufweist.

8. Mechanischer Torsionsschwingungsdämpfer nach einem der vorhergehenden Ansprüche, ***dadurch gekennzeichnet, daß*** die Dämpfungseinrichtung (14, 14', 23, 24; 26, 14", 14"') einen in Umfangsrichtung unterbrochenen Spannring (14, 14'; 23, 24; 26, 14", 14''') aufweist.

9. Mechanischer Torsionsschwingungsdämpfer nach einem der Ansprüche 2 bis 8, ***dadurch gekennzeichnet, daß*** die Mitnehmernocken (32) des Schleppreibrings (14") und die Vertiefungen (33) des Primärteils (1) und/oder die Berührungsflächen des Schleppreibrings (14") und des Sekundärteils (2) Auflaufflächen, Rampen (34, 35, 36, 37) oder Kurvenflächen aufweisen.

10. Mechanischer Torsionsschwingungsdämpfer nach einem der Ansprüche 2 bis 9, ***dadurch gekennzeichnet, daß*** die den Schleppreibring (14, 14'; 23, 24; 26; 14", 14''') aufnehmende Nut (21) in axialer Richtung konisch ausgebildet ist.

11. Mechanischer Torsionsschwingungsdämpfer nach einem der Ansprüche 2 bis 10, ***dadurch gekennzeichnet, daß*** der Schleppreibring aus Kunststoff hergestellt ist.

## Claims

1. A mechanical torsion oscillation damper with a primary art (1) and a secondary part (2), which are connected by means of a spring- and damping system by pressure springs (7) tangentially engaged on contact surfaces on the primary part (1) and secondary part (2) and thrust pistons (6, 6'), wherein the primary part (1) has a ring-shaped part (4), which overlaps a front part of the secondary part (2) and on its inner side, has pockets (5) distributed along the circumference and running in the circumferential direction, and wherein in each pocket (5) running in the circumferential direction, a pair of thrust pistons (6, 6') is arranged, which are pressed apart by means of a pressure spring (7), and wherein a relative movement of the primary part with reference to the secondary part (2) causes a movement of one of the two thrust pistons (6) located a pocket (5) against the other thrust piston (6') under exertion of a friction force on the primary part (1), which leads to a damping of rotational oscillation, wherein the torsion oscillation damper has an additional damping device (14; 24'; 23, 24; 26; 14''; 14''') provided between the primary part (1) and the secondary part (2).

2. The mechanical torsion oscillation damper according to claim 1, **characterized in that** the additional damping device (14; 14'; 23, 24; 26; 14''; 14''') operates radially.

3. The mechanical torsion oscillation damper according to one of the preceding claims, **characterized in that** the additional damping device (14; 14'; 23, 24; 26; 14''; 14''') is ring-shaped.

4. The mechanical torsion oscillation damper according to one of the preceding claims, **characterized in that** the damping device (14; 14'; 23, 24; 26; 14" ; 14''') has a drag friction ring inserted in a groove (21) of the primary part (1) or the secondary part (2) preferably without play of cam tappets (20) on its side opposite the groove, which engaged without play in a recess (22, 22') in the secondary part (2) or the primary part (1).

5. The mechanical torsion oscillation damper according to claim 4, **characterized in that** the drag friction ring (14; 14'; 23, 24, 26; 24''; 24''') has an open hollow profile in the manner of a shaft sealing ring, in which a coiled metal spring (16), a rubber O-ring (17) or the like is accommodated.

6. The mechanical torsion oscillation damper according to claim 4 or 5, **characterized in that** the drag friction ring (26) and the groove (31) accommodat ing this ring have a non-uniform width in the circumferential direction.

7. The mechanical torsion oscillation damper according to one of claims 4 through 6, **characterized in that** the drag friction ring (23, 24) has at least two parts (23, 24) engaging in one another with a lubricant filling (25) located therebetween.

8. The mechanical torsion oscillation damper according to one of the preceding claims, **characterized in that** the damping device (14, 14', 23, 24' 26, 14'', 14''') has a discontinuous tension ring (14, 14'; 23, 24; 26, 14'', 14''') in the circumferential direction.

9. The mechanical torsion oscillation damper according to one of claims 2 through 8, **characterized in that** the cam tappets (32) of the drag friction ring (14'') and the recesses (33) of the primary part (1) and/or the contact surfaces of the drag friction ring (14'') and the secondary part (2) have inclined surfaces, ramps (34, 35, 36, 37) or curved surfaces.

10. The mechanical torsion oscillation damper according to one of claims 2 through 9, **characterized in that** the groove (21) accommodating the drag friction ring (14, 14' ; 23, 24; 26; 14'', 14''') is formed conically in the axial direction.

11. The mechanical torsion oscillation damper according to one of claims 2 through 10, **characterized in that** the drag friction ring is made from plastic.

## Revendications

1. Amortisseur mécanique de vibrations de torsion comprenant une partie primaire (1) et une partie secondaire (2) reliées par l'intermédiaire d'un système de ressorts et d'amortissement composé de ressorts de pression tangentiels (7) et de masselottes de poussée (6, 6') appliqué contre des surfaces de contact de la partie primaire (1) et de la partie secondaire (2), la partie primaire (1) possédant une partie annulaire (4) qui empiète sur une partie avant de la partie secondaire (2) et qui possède sur son côté intérieur des poches (5) s'étendant dans la direction périphérique et réparties sur la périphérie, et une paire de masselottes de poussée (6, 6'), éloignées l'une de l'autre par au moins un ressort de pression (7), étant disposées dans chaque poche (5) s'étendant dans la direction périphérique, et un déplacement relatif de la partie primaire par rapport à la partie secondaire (2) entraînant un déplacement de l'une des deux masselottes de poussée (6) disposées dans la poche (5) en direction de l'autre masselotte de poussée (6'), avec application d'une force de friction sur la partie primaire (1), ce qui entraîne un amortissement de vibrations de torsion, l'amortisseur de vibrations de torsion comportant un dispositif d'amortissement supplémentaire (14; 14'; 23, 24; 26; 14''; 14''') prévu entre la partie primaire (1) et la partie secondaire (2).

2. Amortisseur mécanique de vibrations de torsion selon la revendication 1, **caractérisé en ce que** le dispositif d'amortissement supplémentaire (14; 14'; 23, 24; 26; 14''; 14''') a une action radiale.

3. Amortisseur mécanique de vibrations de torsion selon l'une des revendications précédentes, **caractérisé en ce que** le dispositif d'amortissement supplémentaire (14; 14' ; 23, 24; 26; 14''; 14''') a une forme annulaire.

4. Amortisseur mécanique de vibrations de torsion selon l'une des revendications précédentes, **caractérisé en ce que** le dispositif d'amortissement (14; 14'; 23, 24; 26; 14''; 14"' ) possède un anneau de friction traîné (14; 14'; 23, 24; 26; 14''; 14''') engagé de préférence sans jeu dans une gorge (21) de la partie primaire (1) ou de la partie secondaire (2) et qui est muni, sur son côté opposé à la gorge 21 de tenons d'entraînement (20) en prise avec du jeu dans des cavités (22, 22') ménagées dans la partie secondaire (2) ou dans la partie primaire (1).

5. Amortisseur mécanique de vibrations de torsion selon la revendication 4, **caractérisé en ce que** l'anneau de friction traîné (14; 14'; 23, 24; 26; 14''; 14''') présente un profil creux ouvert dans le genre d'une bague à lèvres, dans lequel est logé un ressort métallique enroulé (16), un joint torique en caoutchouc (17) ou un dispositif similaire.

6. Amortisseur mécanique de vibrations de torsion selon la revendication 4 ou 5, **caractérisé en ce que** l'anneau de friction traîné (26) et la gorge (31) recevant celui-ci présentent une largeur irrégulière dans la direction périphérique.

7. Amortisseur mécanique de vibrations de torsion selon l'une des revendications 4 à 6, **caractérisé en ce que** l'anneau de friction traîné (23, 24) comporte au moins deux parties (23, 24) engagées l'une dans l'autre, l'espace (25) entre elles étant rempli de graisse.

8. Amortisseur mécanique de vibrations de torsion selon l'une des revendications précédentes, **caractérisé en ce que** l'anneau de friction traîné (14; 14'; 23, 24; 26; 14''; 14''') comporte un anneau tendeur (14; 14'; 23, 24; 26; 14''; 14''') interrompu dans la direction périphérique.

9. Amortisseur mécanique de vibrations de torsion selon l'une des revendications 2 à 8, **caractérisé en ce que** les tenons d'entraînement (32) de l'anneau de friction traîné (14'') et les cavités (33) de la partie primaire (1) et/ou les surfaces de contact de l'anneau de friction traîné (14'') et de la partie secondaire (2) comportent des surfaces d'arrêt, des rampes (34, 35, 36, 37) ou des surfaces courbes.

10. Amortisseur mécanique de vibrations de torsion selon l'une des revendications 2 à 9, **caractérisé en ce que** la gorge (21) recevant l'anneau de friction traîné (14; 14'; 23, 24; 26; 14" ; 14''') a une forme conique dans la direction axiale.

11. Amortisseur mécanique de vibrations de torsion selon l'une des revendications 2 à 10, **caractérisé en ce que** l'anneau de friction traîné est réalisé en une matière synthétique.
